# EUROPEAN PATENT SPECIFICATION

(11) **EP 3 051 749 B1**
(45) Date of publication and mention of the grant of the patent: **01.08.2018**
(21) Application number: 14846175.9
(22) Date of filing: 16.06.2014
(51) Int. Cl.: H04L 12/26, H04L 12/24

(54) **OPERATION AND MAINTENANCE MONITORING METHOD BASED ON SITE STATUS, DEVICE, EQUIPMENT AND SYSTEM**
BETRIEBS- UND WARTUNGSÜBERWACHUNGSVERFAHREN AUF DER BASIS VON STANDORTSTATUS, VORRICHTUNG, AUSRÜSTUNG UND SYSTEM
PROCÉDÉ DE SURVEILLANCE DU FONCTIONNEMENT ET DE L'ENTRETIEN SUR LA BASE D'UN ÉTAT DE SITE, DISPOSITIF, ÉQUIPEMENT ET SYSTÈME ASSOCIÉS

(30) Priority: 23.09.2013 CN 201310435937
(43) Date of publication of application: 03.08.2016
(73) Proprietor: ZTE Corporation, Shenzhen, Guangdong 518057 (CN)
(72) Inventor: LI, Yuanping, Shenzhen Guangdong 518057 (CN); SONG, Hanzeng, Shenzhen Guangdong 518057 (CN); CHEN, Nan, Shenzhen Guangdong 518057 (CN); ZHAO, Weiguang, Shenzhen Guangdong 518057 (CN)
(74) Representative: Deambrogi, Edgardo
(86) International application number: PCT/CN2014/079981
(87) International publication number: WO 2015/039468

(56) References cited:
- EP-A1- 2 334 023
- EP-A1- 2 894 813
- EP-B1- 1 275 222
- WO-A2-97/24838
- CN-A- 101 997 702
- CN-A- 102 082 701
- CN-A- 102 333 002

## Description

### Technical Field

The present disclosure relates to the technical field of network management, particularly to an operation and maintenance method, device, equipment and system for monitoring states of a plurality of services of a station based on a station state, i.e. by using the station as a management unit and with reference to the degrees of influence of alarm services.

### Background

Generally, an overall operation soundness state of a network system refers to a result obtained by analyzing a large amount of alarms reported by various network elements in a network management technology. At present, alarm management in an existing network management system generally means that a network element is used as a monitoring management unit, an alarm is used as basic data, processing is performed by the system layer by layer, and a service is distributed to finally help a user to monitor operation and maintenance of a network, so as to monitor the whole network, and operate and maintain the network.

Network elements in a practical network system are deployed in various stations based on many factors including planning, functions, geography, and costs etc.. A station at least includes one or more network elements geographically and spatially. Besides, network elements of different network types also carry services of different types. In the meanwhile, a station generally manifests as a network node in the network, and the capability of the station to operate normally will directly affect the availability of a service carried by the station and operation conditions of the whole network.

In the operation and maintenance method that uses the network element as the monitoring management unit in the existing network management system, however, the network management system often fails to directly judge whether a station is normal when an alarm is generated by a device in the station and reported to the network management system, alarms reported by the station are necessarily analyzed by monitoring personnel one by one, so that it is possible to accurately analyze the soundness of the station and affected service types according to types of specific network elements in the station, networks to which the network elements belong, and alarms in other devices, thus the network management system can assign a work order to the station according to the degree of importance and emergency of an alarm. However, only some experienced operation staff can judge the processing priority of the station comprehensively according to the aforementioned aspects in normal conditions, while those with insufficient experience can hardly make judgment or even fail to obtain an accurate judgment result, thus undoubtedly reducing the operation and maintenance efficiency of the network management system.

EP2894813, WO97/24838, EP1275222, CN102333002 and CN102082701 provide respective technical solutions; however, the above mentioned problem still remains unsolved.

### Summary

An operation and maintenance monitoring method, device, equipment and system based on a station state are provided by embodiments of the present disclosure so as to solve at least one of the problems including a single operation and maintenance perspective, complicated analysis and judgment, and low operation and maintenance efficiency existing in an existing network management system.

A method for monitoring operation and maintenance based on a station state is provided according to the subject-matter of claim 1. Preferably, the station service types may include, but may not be limited to an application service, a bearer service, or a supporting service.

Preferably, the station service types may be configured with graphic objects for uniquely distinguishing the service types.

Preferably, after the alarm priorities of the corresponding network elements are obtained according to the degrees of influence of the alarm services and the influence factors of the station services, the operation and maintenance monitoring method based on the station state may further include that:
at least one graphic object corresponding to a station service type of the station is displayed, wherein display attribute information of the displayed graphic object is configured according to the degree of influence of an alarm service of a network element having the highest alarm priority of a corresponding station service type.

Preferably, the display attribute information may include alarm service influence degree information represented by a color attribute and information about the time when an alarm having the highest alarm priority is generated.

Preferably, the method for monitoring operation and maintenance based on the station state may further include that:
display attribute information contained in a selected graphic object is specifically displayed on a current display device according to a command inputted by a user.

A device for monitoring operation and maintenance based on a station state is provided according to the subject-matter of claim 7. Preferably, the station service types may be configured with graphic objects for uniquely distinguishing the service types.

Preferably, the device for monitoring operation and maintenance based on the station state may further include:
a displaying module, configured to display at least one graphic object corresponding to a station service type of the station on a current display device on a current display device, wherein display attribute information of the displayed graphic object is configured according to the degree of influence of an alarm service of a network element having the highest alarm priority of a corresponding station service type.

Preferably, the display attribute information may include alarm service influence degree information represented by a color attribute and information about the time when an alarm having the highest alarm priority is generated.

Preferably, the device for monitoring operation and maintenance based on the station state may further include:
a user command control module, configured to specifically display, according to a command inputted by a user, display attribute information contained in a selected graphic object on the current display device.

A monitoring equipment is provided according to the subject-matter of claim 13. A system for monitoring operation and maintenance based on a station state is provided according to the subject-matter of claim 14. It may be seen from the technical solution provided by the embodiments of the present disclosure that the system for monitoring operation and maintenance based on a station state according to an embodiment of the present disclosure uses a station as a monitoring unit to analyze states of a plurality of services of a station according to the degrees of influence of alarm services. In practical application, operation states of the station may be also controlled quickly, efficiently and intuitively by various auxiliary means including a topological graph of the network station, or a topological graph of a Geographic Information System (GIS), a topological graph in the station, a station analysis report and so on, thus ascertaining the soundness of various services, bringing convenience for determining a basis for task assignment of the station, and improving the overall operation and maintenance efficiency of a network.

### Brief Description of the Drawings

Fig. 1 is a flowchart of a method for monitoring operation and maintenance based on a station state according to an embodiment of the present disclosure;
Fig. 2 is a flowchart of a method for obtaining the alarm priorities of corresponding network elements according to the degrees of influence of alarm services and influence factors of station services according to an embodiment of the present disclosure;
Fig. 3 is a flowchart of a station state-based operation and maintenance monitoring method preferably provided by an embodiment of the present disclosure;
Fig. 4 is a flowchart of a station state-based operation and maintenance monitoring method preferably provided by an embodiment of the present disclosure;
Fig. 5 is a structural diagram of a device for monitoring operation and maintenance based on a station state according to an embodiment of the present disclosure; and
Fig. 6 is a structural diagram of a processing module preferably provided by an embodiment of the present disclosure.

Implementation of the purposes, functional features and excellent effects of the present disclosure will be further described hereinafter with reference to specific embodiments and the accompanying drawings.

### Detailed Description of the Embodiments

The technical solution of the present disclosure will be further expounded hereinafter with reference to the accompanying drawings and specific embodiments so that those skilled in the art may better understand and implement the present disclosure. However, the present disclosure is not limited by the illustrated embodiments.

The present disclosure provides a method for monitoring states of a plurality of services of a station according to the degrees of influence of alarm services by using a station as a management unit, thereby bringing convenience for operation and maintenance staff to perform routine operation and maintenance on the station, and quickly, efficiently and intuitively control operation states of the station and the services of the station.

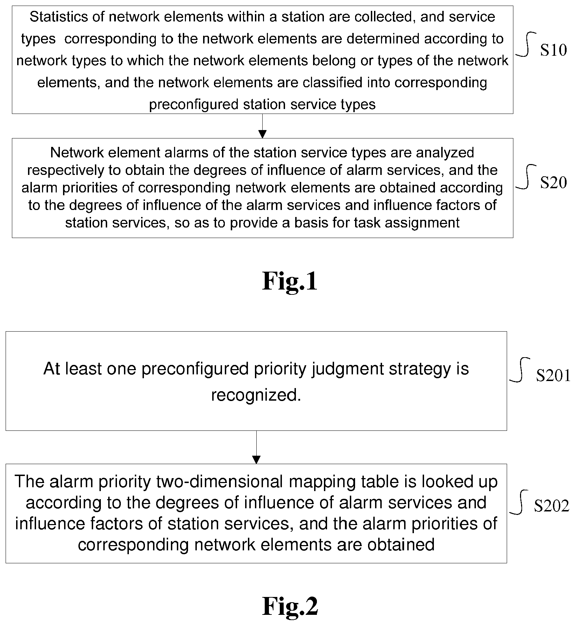

Specifically, as shown in Fig. 1, an embodiment of the present disclosure provides a method for monitoring operation and maintenance based on a station state, which includes the following steps.

Step 10: Statistics of network elements in a station are collected, and service types corresponding to the network elements are determined according to network types to which the network elements belong or types of the network elements, and the network elements are classified into corresponding preconfigured station service types.

Step 20: Network element alarms of the station service types are analyzed respectively to obtain the degrees of influence of alarm services, and the alarm priorities of corresponding network elements are obtained according to the degrees of influence of the alarm services and influence factors of station services, so as to provide a basis for task assignment.

In the present embodiment, the station service types in Step 10 include, but are not limited to an application service, a bearer service, or a supporting service.

In the present embodiment, the station service types in Step 10 are configured to uniquely distinguish graphic objects of the service types.

For example, in the present embodiment, the station service types are configured as a plurality of corresponding graphic objects as shown in the following Table 1, and after the configuration, the configuration information is stored permanently. Besides, operations including deletion, modification and so on may be performed subsequently on all configuration information stored permanently. In the meanwhile, a new station service type and a corresponding graphic object symbol may be also added.

**Table 1**

| Station service type | Graphic object symbol |
|---|---|
| Application service | ☆ |
| Bearer service | Δ |
| Supporting service | □ |
| Other services | ○ |

In the present embodiment, the service types corresponding to the network elements may be divided according to the network types to which the network elements belong or the types of the network elements, so as to classify the service types and then the classification information may be stored permanently. Besides, operations including modification, deletion and so on are also supported subsequently for the classification information stored permanently. In the meanwhile, network types or network element types corresponding to unclassified service types may be also classified and set.

For example, a network element device-service type classification condition that may be used for reference is as shown in the following Table 2.

**Table 2**

| Network type or network element type | Service type |
|---|---|
| CDMA | Application service |
| GSM | Application service |
| TD-SCDMA | Application service |
| NG-SDH | Bearer service |
| MSTP | Bearer service |
| IP | Bearer service |
| Microwave | Bearer service |
| Power Supply | Supporting service |
| HLR | Other services |
| IDC | Other services |

In the present embodiment, as shown in Fig. 2, a method for obtaining the alarm priorities of the corresponding network elements according to the degrees of influence of the alarm services and the influence factors of the station services in Step 20 includes the following steps.

Step 201: At least one preconfigured priority judgment strategy is recognized, wherein the priority judgment strategy defines an alarm priority two-dimensional mapping table of the degrees of influence of the alarm services and the influence factors of the station services in two dimensions.

Step 202: The alarm priority two-dimensional mapping table is queried according to the degrees of influence of the alarm services and the influence factors of the station services, and the alarm priorities of the corresponding network elements are obtained accordingly.

In the present embodiment, a response two-dimensional mapping table is defined according to the degrees of influence of the alarm services and the influence factors of the station services to record information of alarm priorities in spaces of different dimensions. For example, a two-dimensional mapping table provided by the present embodiment is as shown in the following Table 3.

**Table 3**

| | Service cancellation | Service degradation | Normal service |
|---|---|---|---|
| VIP users | ****** | **** | * |
| Governments, institutions, schools and hospitals | ****** | **** | * |
| Commercial centers | ****** | **** | * |
| Urban areas | ****** | **** | * |
| Rural areas | **** | ** | * |
| Traffic lines | ***** | *** | * |
| Unknown areas | *** | * | |
| Sparsely populated areas | ** | * | |

Wherein the "*******", "****", "***", "**" and "*" represent the alarm priorities of network elements. Besides, the degrees of influence of the alarm services are divided into three levels, i.e. "service cancellation", "service degradation" and "normal service" in the present embodiment, wherein

" Service cancellation" means that if such an alarm occurs on a network element, functions of the network element will fail to operate normally, the alarm is an important and emergent alarm, and a service of such an alarm has the greatest influence.

" Service degradation" means that if such an alarm occurs on a network element, functions of the network element may operate or some of the functions may operate, but the quality of service may deteriorate.

"Normal service" means that if such an alarm occurs on a network element, functions of the network element may operate normally, operation and maintenance staff do not need to maintain task assignment at first hand, the alarm has the lowest the degree of emergency, but the operation and maintenance staff still need to pay attention continuously.

Besides, the influence factors of the station services are divided into eight levels including "VIP users", "governments, institutions, schools and hospitals", "commercial centers", "urban areas", "rural areas", "traffic lines", "unknown areas", and "sparsely populated areas", representing that alarms in different areas will be processed according to different priorities.

The alarm priorities of the corresponding network elements may be obtained conveniently through the two-dimensional mapping table defined according to the degrees of influence of the alarm services and the influence factors of the station services.

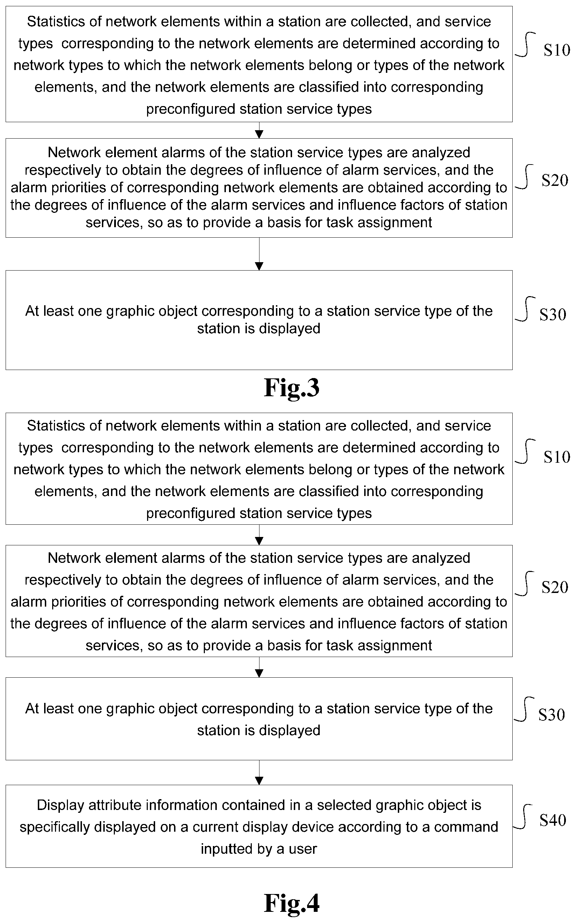

In a more preferred embodiment, as shown in Fig. 3, after Step 20, i.e. after the alarm priorities of the corresponding network elements are obtained according to the degrees of influence of the alarm services and the influence factors of the station services, the operation and maintenance monitoring method based on the station state further includes the following step.

Step 30: At least one graphic object corresponding to a station service type of the station is displayed, wherein display attribute information of the displayed graphic object is configured according to the degree of influence of an alarm service of a network element having the highest alarm priority of a corresponding station service type.

More preferably, the display attribute information includes alarm service influence degree information represented by a color attribute and information of the time when an alarm having the highest alarm priority is generated.

After Step 30, as shown in Fig. 4, the operation and maintenance monitoring method based on the station state further includes the following step.

Step 40: Display attribute information contained in a selected graphic object is specifically displayed on a current display device according to a command inputted by a user.

For example, the displayed display attribute information may further include information of a specific network element having the highest alarm priority, specific abnormal information of an alarm and so on besides the alarm service influence degree information represented by the color attribute and the information of the time when the alarm having the highest alarm priority is generated.

Specifically, by applying an operation and maintenance monitoring method based on a station state according to an embodiment of the present disclosure, when a station starts monitoring, statistics of network elements in the station is collected, specific service types carried by the station are determined according to service types corresponding to network types to which the network elements belong (or types of the network element devices), alarms of network elements of the service types are analyzed respectively, and the degree of influence of an alarm service of an alarm having the highest priority of a network element and the time when the corresponding alarm occurs are obtained, so as to calculate states of services of the corresponding station and detect the states of the services of the station.

Alternatively, graphic object symbols corresponding to the station service types are combined and arranged subsequently, the graphic object symbols are rendered with different colors according to conditions of specific network elements of the station service types. Colors used in the present embodiment are as follows: red represents service cancellation, yellow represents service degradation, and green indicates that a service is normal.

Besides, a user may move the mouse to a corresponding graphic object symbol so as to rapidly track and obtain specific alarm information currently having the highest priority of a corresponding station service type. At the moment, the system will display detailed information indicating that a corresponding network element has an alarm having the highest priority, wherein the time when a station service state is updated is the time when an alarm having the greatest alarm service influence degree among services is generated and the time when the earliest alarm is generated is used when alarms having the same alarm service influence degree exist.

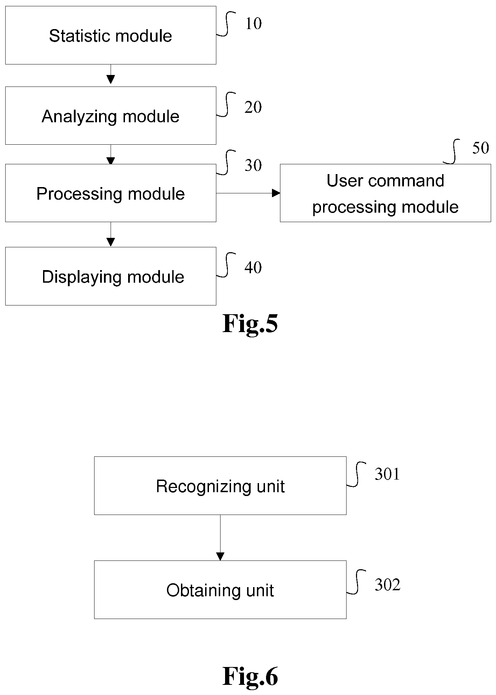

As shown in Fig. 5, an embodiment of the present disclosure further provides an operation and maintenance monitoring device based on a station state, including:
a statistic module 10, configured to collect statistics of network elements in a station, and to determine service types corresponding to the network elements according to network types to which the network elements belong or types of the network element devices, and classify the network elements into corresponding preconfigured station service types;
an analyzing module 20, configured to respectively analyze network element alarms of the station service types to obtain the degrees of influence of alarm services; and
a processing module 30, configured to obtain the alarm priorities of corresponding network elements according to the degrees of influence of the alarm services and influence factors of station services, so as to provide a basis for task assignment.

Wherein the station service types include, but are not limited to an application service, a bearer service, or a supporting service.

In the present embodiment, the station service types are configured with graphic objects for uniquely distinguishing the service types.

As shown in Fig. 6, in the present embodiment, the processing module 30 includes:
a recognizing unit 301, configured to recognize at least one preconfigured priority judgment strategy, wherein the priority judgment strategy defines an alarm priority two-dimensional mapping table of the degrees of influence of the alarm services and the influence factors of the station services in two dimensions; and
an obtaining unit 302, configured to look up the alarm priority two-dimensional mapping table according to the degrees of influence of the alarm services and the influence factors of the station services, and obtain the alarm priorities of the corresponding network elements accordingly.

Referring to Fig. 5, in a preferred embodiment, the operation and maintenance monitoring device based on the station state further includes:
a displaying module 40, configured to display at least one graphic object corresponding to a station service type of the station on a current display device on a current display device, wherein display attribute information of the displayed graphic object is configured according to the degree of influence of an alarm service of a network element having the highest alarm priority of a corresponding station service type.

Wherein the display attribute information includes alarm service influence degree information represented by a color attribute and information about the time when an alarm having the highest alarm priority is generated.

Referring to Fig. 5, the operation and maintenance monitoring device based on the station state further includes:
a user command control module 50, configured to specifically display, according to a command inputted by a user, display attribute information contained in a selected graphic object on the current display device.

Accordingly, an embodiment of the present disclosure further provides a monitoring equipment, which includes the operation and maintenance monitoring device based on the station state. Specifically, referring to Fig. 5 to Fig. 6, the device includes:
a statistic module 10, configured to collect statistics of network elements in a station, and determine service types corresponding to the network elements according to network types to which the network elements belong or types of the network element devices, and classify the network elements into corresponding preconfigured station service types;
an analyzing module 20, configured to respectively analyze network element alarms of the station service types to obtain the degrees of influence of alarm services; and
a processing module 30, configured to obtain the alarm priorities of corresponding network elements according to the degrees of influence of the alarm services and influence factors of station services, so as to provide a basis for task assignment,

The device for monitoring operation and maintenance based on the station state may be specifically described with reference to what has been mentioned above, and will not be described repeatedly here.

Besides, an embodiment of the present disclosure further provides system for monitoring operation and maintenance based on a station state, which includes a station having at least one network element and further includes the monitoring equipment located at a monitoring center. The monitoring equipment includes a station state-based operation and maintenance monitoring device provided by an embodiment of the present disclosure, and states of a plurality of services of the station are monitored according to the degrees of influence of alarm services by the equipment by using the station as a management unit.

The above are only preferred embodiments of the present disclosure, and the patent scope of the present disclosure should not be limited thereto. Any equivalent structure or equivalent flow modifications made on the basis of the specification and the content of the accompanying drawings of the present disclosure, or direct or indirect application to other related fields, shall fall within the patent protection scope of the present disclosure.

## Claims

1. A method for monitoring operation and maintenance based on a station state, comprising:
determining service types of network elements within a station according to network types to which the network elements belong or types of the network elements and classify the network elements into corresponding preconfigured station service types (S10); and
respectively analyzing network element alarms of the station service types to obtain the degrees of influence of alarm services, and obtaining the alarm priorities of corresponding network elements according to the degrees of influence of the alarm services and influence factors of station services, so as to provide a basis for task assignment (S20);
wherein obtaining the alarm priorities of the corresponding network elements according to the degrees of influence of the alarm services and the influence factors of the station services comprises:
recognizing at least one preconfigured priority judgment strategy, wherein the priority judgment strategy defines an alarm priority two-dimensional mapping table of the degrees of influence of the alarm services and the influence factors of the station services in two dimensions; and
looking up the alarm priority two-dimensional mapping table according to the degrees of influence of the alarm services and the influence factors of the station services, and obtaining the alarm priorities of the corresponding network elements;
wherein the degrees of influence of the alarm services comprise service cancellation, service degradation and normal service, the service cancellation means that if such an alarm occurs on a network element, functions of the network element will fail to operate normally, the alarm is an important and emergent alarm, and a service of such an alarm has the greatest influence; the service degradation means that if such an alarm occurs on a network element, functions of the network element may operate or some of the functions may operate, but the quality of service may deteriorate; the normal service means that if such an alarm occurs on a network element, functions of the network element may operate normally, operation and maintenance staff do not need to maintain task assignment at first hand, the alarm has the lowest degree of emergency, but the operation and maintenance staff still need to pay attention continuously;
wherein the influence factors of the station services are divided into multiple levels, which represent that alarms in different areas will be processed according to different priorities.

2. The method for monitoring operation and maintenance based on a station state according to claim 1, wherein the station service types include an application service, a bearer service, or a supporting service.

3. The method for monitoring operation and maintenance based on a station state according to claim 1, wherein the station service types are configured with graphic objects for uniquely distinguishing the service types.

4. The method for monitoring operation and maintenance based on a station state according to claim 3, wherein after obtaining the alarm priorities of the corresponding network elements according to the degrees of influence of the alarm services and the influence factors of the station services, the method further comprises:
displaying at least one graphic object corresponding to a station service type of the station, wherein display attribute information of the displayed graphic object is configured according to the degree of influence of an alarm service of a network element having the highest alarm priority of a corresponding station service type.

5. The method for monitoring operation and maintenance based on a station state according to claim 4, wherein the display attribute information comprises alarm service influence degree information represented by a color attribute and information about the time when an alarm having the highest alarm priority is generated.

6. The method for monitoring operation and maintenance based on a station state according to claim 4, wherein the method further comprises:
according to a command inputted by a user, specifically displaying display attribute information contained in a selected graphic object on a current display device.

7. A device for monitoring operation and maintenance based on a station state, comprising:
a statistic module (10), configured to determine service types of network elements within in a station according to network types to which the network elements belong or types of the network element devices, and classify the network elements into corresponding preconfigured station service types;
an analyzing module (20), configured to respectively analyze network element alarms of the station service types to obtain the degrees of influence of alarm services; and
a processing module (30), configured to obtain the alarm priorities of corresponding network elements according to the degrees of influence of the alarm services and influence factors of station services, so as to provide a basis for task assignment;
wherein the processing module comprises:
a recognizing unit (301), configured to recognize at least one preconfigured priority judgment strategy, wherein the priority judgment strategy defines an alarm priority two-dimensional mapping table of the degrees of influence of the alarm services and the influence factors of the station services in two dimensions; and
an obtaining unit (302), configured to look up the alarm priority two-dimensional mapping table according to the degrees of influence of the alarm services and the influence factors of the station services, and obtain the alarm priorities of the corresponding network elements;
wherein the degrees of influence of the alarm services comprise service cancellation, service degradation and normal service, the service cancellation means that if such an alarm occurs on a network element, functions of the network element will fail to operate normally, the alarm is an important and emergent alarm, and a service of such an alarm has the greatest influence; the service degradation means that if such an alarm occurs on a network element, functions of the network element may operate or some of the functions may operate, but the quality of service may deteriorate; the normal service means that if such an alarm occurs on a network element, functions of the network element may operate normally, operation and maintenance staff do not need to maintain task assignment at first hand, the alarm has the lowest degree of emergency, but the operation and maintenance staff still need to pay attention continuously;
wherein the influence factors of the station services are divided into multiple levels, which represent that alarms in different areas will be processed according to different priorities.

8. The device for monitoring operation and maintenance based on a station state according to claim 7, wherein the station service types include an application service, a bearer service, or a supporting service.

9. The device for monitoring operation and maintenance based on a station state according to claim 7, wherein the station service types are configured with graphic objects for uniquely distinguish the service types.

10. The device for monitoring operation and maintenance based on a station state according to claim 9, wherein the device further comprises:
a displaying module (40), configured to display at least one graphic object corresponding to a station service type of the station on a current display device on a current display device, wherein display attribute information of the displayed graphic object is configured according to the degree of influence of an alarm service of a network element having the highest alarm priority of a corresponding station service type.

11. The device for monitoring operation and maintenance based on a station state according to claim 10, wherein the display attribute information comprises alarm service influence degree information represented by a color attribute and information about the time when an alarm having the highest alarm priority is generated.

12. The device for monitoring operation and maintenance based on a station state according to claim 10, wherein the device further comprises:
a user command control module (50), configured to specifically display, according to a command inputted by a user, display attribute information contained in a selected graphic object on the current display device.

13. A monitoring equipment, comprising the device for monitoring operation and maintenance based on the station state according to any one of claims 7 to 12.

14. A system for monitoring operation and maintenance based on a station state, comprising a station having at least one network element and further comprising the monitoring equipment located at a monitoring center according to claim 13.

## Patentansprüche

1. Verfahren zum Überwachen von Betrieb und Wartung auf der Grundlage eines Stationszustands, umfassend:
Ermitteln von Diensttypen von Netzwerkelementen innerhalb einer Station gemäß Netzwerktypen, zu denen die Netzwerkelemente oder Typen der Netzwerkelemente gehören, und Klassifizieren der Netzwerkelemente in entsprechende vorkonfigurierte Stationsdiensttypen (S10); und
jeweils Analysieren von Netzwerkelementalarmen der Stationsdiensttypen, um die Einflussgrade von Alarmdiensten zu erhalten, und Erhalten der Alarmprioritäten entsprechender Netzwerkelemente gemäß den Einflussgraden der Alarmdienste und Einflussfaktoren von Stationsdiensten, um eine Grundlage für die Aufgabenzuweisung (S20) bereitzustellen;
wobei das Erhalten der Alarmprioritäten der entsprechenden Netzwerkelemente gemäß den Einflussgraden der Alarmdienste und den Einflussfaktoren der Stationsdienste umfasst:
Erkennen mindestens einer vorkonfigurierten Prioritätsbeurteilungsstrategie, wobei die Prioritätsbeurteilungsstrategie eine zweidimensionale Alarmprioritätszuordnungstabelle der Einflussgrade der Alarmdienste und der Einflussfaktoren der Stationsdienste in zwei Dimensionen definiert; und
Nachschlagen in der zweidimensionalen Alarmprioritätszuordnungstabelle gemäß den Einflussgraden der Alarmdienste und der Einflussfaktoren der Stationsdienste und Erhalten der Alarmprioritäten der entsprechenden Netzwerkelemente;
wobei die Einflussgrade der Alarmdienste Dienstabruch, Dienstverschlechterung und normalen Dienst umfassen, der Dienstabruch bedeutet, dass bei Auftreten eines derartigen Alarms bei einem Netzwerkelement, Funktionen des Netzwerkelements nicht normal funktionieren, der Alarm ein wichtiger und auftauchender Alarm ist und ein Dienst eines derartigen Alarms den größten Einfluss aufweist; die Dienstverschlechterung bedeutet, dass bei Auftreten eines derartigen Alarms bei einem Netzwerkelement Funktionen des Netzwerkelements funktionieren können oder einige der Funktionen funktionieren können, sich aber die Dienstgüte verschlechtern kann; der normale Dienst bedeutet, dass bei Auftreten eines derartigen Alarms bei einem Netzwerkelement Funktionen des Netzwerkelements normal funktionieren können, das Bedienungs- und Wartungspersonal die Aufgabenzuweisung nicht vorrangig einhalten muss, der Alarm den niedrigsten Notfallgrad aufweist, das Bedienungs- und Wartungspersonal aber weiterhin kontinuierlich aufpassen muss;
wobei die Einflussfaktoren der Stationsdienste in mehrere Ebenen unterteilt sind, die wiedergeben, dass Alarme in verschiedenen Bereichen gemäß unterschiedlichen Prioritäten verarbeitet werden.

2. Verfahren zum Überwachen des Betriebs und der Wartung auf der Grundlage eines Stationszustands nach Anspruch 1, wobei die Stationsdiensttypen einen Anwendungsdienst, einen Trägerdienst oder einen Unterstützungsdienst umfassen.

3. Verfahren zum Überwachen von Betrieb und Wartung auf der Grundlage eines Stationszustands nach Anspruch 1, wobei die Stationsdiensttypen mit Grafikobjekten zum eindeutigen Unterscheiden der Diensttypen eingerichtet sind.

4. Verfahren zum Überwachen von Betrieb und Wartung auf der Grundlage eines Stationszustands nach Anspruch 3, wobei nach dem Erhalten der Alarmprioritäten der entsprechenden Netzwerkelemente gemäß den Einflussgraden der Alarmdienste und der Einflussfaktoren der Stationsdienste das Verfahren ferner umfasst:
Anzeigen mindestens eines Grafikobjekts, das einem Stationsdiensttyp der Station entspricht, wobei Anzeigeattributinformationen des angezeigten Grafikobjekts gemäß dem Einflussgrad eines Alarmdienstes eines Netzwerkelements mit der höchsten Alarmpriorität einer entsprechenden Station eingerichtet sind.

5. Verfahren zum Überwachen von Betrieb und Wartung auf der Grundlage eines Stationszustands nach Anspruch 4, wobei die Anzeigeattributinformationen Alarmdiensteinflussgradinformationen umfassen, die durch ein Farbattribut wiedergegeben werden, und Informationen über den Zeitpunkt, wann ein Alarm mit der höchsten Alarmpriorität erzeugt wurde.

6. Verfahren zum Überwachen von Betrieb und Wartung auf der Grundlage eines Stationszustands nach Anspruch 4, wobei das Verfahren ferner umfasst:
gemäß einem Befehl, der durch einen Benutzer eingegeben wurde, insbesondere Anzeigen von Attributinformationen, die in einem ausgewählten Grafikobjekt auf einer aktuellen Anzeigevorrichtung enthalten sind.

7. Vorrichtung zur Überwachung von Betrieb und Wartung auf der Grundlage eines Stationszustands, umfassend:
ein Statistikmodul (10), das eingerichtet ist, um Diensttypen von Netzwerkelementen innerhalb einer Station gemäß Netzwerktypen zu ermitteln, zu denen die Netzwerkelemente oder Typen der Netzwerkelementvorrichtungen gehören, und die Netzwerkelemente in entsprechende vorkonfigurierte Stationsdiensttypen zu klassifizieren;
ein Analysiermodul (20), das eingerichtet ist, um jeweils Netzwerkelementalarme der Stationsdiensttypen zu analysieren, um die Einflussgrade von Alarmdiensten zu erhalten; und
ein Verarbeitungsmodul (30), das eingerichtet ist, um die Alarmprioritäten entsprechender Netzwerkelemente gemäß den Einflussgraden der Alarmdienste und Einflussfaktoren von Stationsdiensten zu erhalten, um eine Grundlage für die Aufgabenzuweisung bereitzustellen;
wobei das Verarbeitungsmodul umfasst:
eine Erkennungseinheit (301), die eingerichtet ist, um mindestens eine vorkonfigurierte Prioritätsbeurteilungsstrategie zu erkennen, wobei die Prioritätsbeurteilungsstrategie eine zweidimensionale Alarmprioritätszuordnungstabelle der Einflussgrade der Alarmdienste und der Einflussfaktoren der Stationsdienste in zwei Dimensionen definiert; und
eine Erlangungseinheit (302), die eingerichtet ist, um in der zweidimensionalen Alarmprioritätszuordnungstabelle gemäß den Einflussgraden der Alarmdienste und der Einflussfaktoren der Stationsdienste nachzuschlagen und die Alarmprioritäten der entsprechenden Netzwerkelemente zu erhalten;
wobei die Einflussgrade der Alarmdienste Dienstabruch, Dienstverschlechterung und normalen Dienst umfassen, der Dienstabruch bedeutet, dass bei Auftreten eines derartigen Alarms bei einem Netzwerkelement, Funktionen des Netzwerkelements nicht normal funktionieren, der Alarm ein wichtiger und auftauchender Alarm ist und ein Dienst eines derartigen Alarms den größten Einfluss aufweist; die Dienstverschlechterung bedeutet, dass bei Auftreten eines derartigen Alarms bei einem Netzwerkelement Funktionen des Netzwerkelements funktionieren können oder einige der Funktionen funktionieren können, sich aber die Dienstgüte verschlechtern kann; der normale Dienst bedeutet, dass bei Auftreten eines derartigen Alarms bei einem Netzwerkelement Funktionen des Netzwerkelements normal funktionieren können, das Bedienungs- und Wartungspersonal die Aufgabenzuweisung nicht vorrangig einhalten muss, der Alarm den niedrigsten Notfallgrad aufweist, das Bedienungs- und Wartungspersonal aber weiterhin kontinuierlich aufpassen muss;
wobei die Einflussfaktoren der Stationsdienste in mehrere Ebenen unterteilt sind, die wiedergeben, dass Alarme in verschiedenen Bereichen gemäß unterschiedlichen Prioritäten verarbeitet werden.

8. Vorrichtung zum Überwachen des Betriebs und der Wartung auf der Grundlage eines Stationszustands nach Anspruch 7, wobei die Stationsdiensttypen einen Anwendungsdienst, einen Trägerdienst oder einen Unterstützungsdienst umfassen.

9. Vorrichtung zum Überwachen von Betrieb und Wartung auf der Grundlage eines Stationszustands nach Anspruch 7, wobei die Stationsdiensttypen mit Grafikobjekten zum eindeutigen Unterscheiden der Diensttypen eingerichtet sind.

10. Vorrichtung zur Überwachung des Betriebs und der Wartung auf der Grundlage eines Stationszustands nach Anspruch 9, wobei die Vorrichtung ferner umfasst:
ein Anzeigemodul (40), das eingerichtet ist, um mindestens ein Grafikobjekt entsprechend einem Stationsdiensttyp der Station auf einer aktuellen Anzeigevorrichtung auf einer aktuellen Anzeigevorrichtung anzuzeigen, wobei die Anzeigeattributinformationen des angezeigten Grafikobjekts entsprechend dem Einflussgrad eines Alarmdienstes auf ein Netzwerkelement mit der höchsten Alarmpriorität eines entsprechenden Stationsdiensttyps konfiguriert sind.

11. Vorrichtung zum Überwachen von Betrieb und Wartung auf der Grundlage eines Stationszustands nach Anspruch 10, wobei die Anzeigeattributinformationen Alarmdiensteinflussgradinformationen umfassen, die durch ein Farbattribut wiedergegeben werden, und Informationen über den Zeitpunkt, wann ein Alarm mit der höchsten Alarmpriorität erzeugt wurde.

12. Vorrichtung zur Überwachung des Betriebs und der Wartung auf der Grundlage eines Stationszustands nach Anspruch 10, wobei die Vorrichtung ferner umfasst:
ein Benutzerbefehlssteuermodul (50), das eingerichtet ist, um gemäß einem von einem Benutzer eingegebenen Befehl Anzeigeattributinformationen anzuzeigen, die in einem ausgewählten Grafikobjekt auf der aktuellen Anzeigevorrichtung enthalten sind.

13. Überwachungsausrüstung, umfassend die Vorrichtung zur Überwachung von Betrieb und Wartung auf der Grundlage des Stationszustands nach einem der Ansprüche 7 bis 12.

14. System zum Überwachen von Betrieb und Wartung auf der Grundlage eines Stationszustands, umfassend eine Station mit mindestens einem Netzwerkelement und ferner umfassend die in einem Überwachungszentrum angeordnete Überwachungsausrüstung nach Anspruch 13.

## Revendications

1. Procédé de surveillance de fonctionnement et de maintenance basé sur un état de station, consistant à :
déterminer des types de service d'éléments de réseau dans une station en fonction des types de réseau auxquels appartiennent les éléments de réseau ou des types d'éléments de réseau et classer les éléments de réseau en types de services de station pré-configurés correspondants (S10) ; et
analyser respectivement les alarmes d'élément de réseau des types de services de station pour obtenir les degrés d'influence des services d'alarme et obtenir les priorités d'alarme des éléments de réseau correspondants en fonction des degrés d'influence des services d'alarme et des facteurs d'influence des services de stations, de manière à fournir une base pour l'attribution de tâches (S20) ;
l'obtention des priorités d'alarme des éléments de réseau correspondants en fonction des degrés d'influence des services d'alarme et des facteurs d'influence des services de la station consistant à :
reconnaître au moins une stratégie de jugement prioritaire pré-configurée, la stratégie de jugement prioritaire définissant une table de correspondance bidimensionnelle de priorité d'alarme des degrés d'influence des services d'alarme et des facteurs d'influence des services de station en deux dimensions ; et
consulter la table de correspondance bidimensionnelle de priorité d'alarme en fonction des degrés d'influence des services d'alarme et des facteurs d'influence des services de station et obtenir les priorités d'alarme des éléments de réseau correspondants ;
les degrés d'influence des services d'alarme comprenant l'annulation du service, la dégradation du service et le service normal, l'annulation du service signifie que si une telle alarme survient sur un élément de réseau, les fonctions de l'élément réseau ne fonctionneront pas normalement, l'alarme est importante et émergente et un service d'une telle alarme a la plus grande influence ; la dégradation du service signifie que si une telle alarme se produit sur un élément de réseau, les fonctions de l'élément de réseau peuvent fonctionner ou certaines des fonctions peuvent fonctionner, mais la qualité de service peut se détériorer ; le service normal signifie que si une telle alarme survient sur un élément de réseau, les fonctions de l'élément de réseau peuvent fonctionner normalement, le personnel d'exploitation et de maintenance n'a pas besoin de maintenir l'attribution de tâche immédiate, l'alarme a le degré le plus faible d'urgence, mais le personnel d'exploitation et de maintenance doit toujours faire attention en permanence ;
les facteurs d'influence des services de la station étant divisés en plusieurs niveaux, qui représentent le fait que les alarmes dans différentes zones seront traitées en fonction de priorités différentes.

2. Procédé de surveillance de fonctionnement et de maintenance basé sur un état de station selon la revendication 1, les types de services de station comprenant un service d'application, un service de porteur ou un service de support.

3. Procédé de surveillance de fonctionnement et de maintenance basé sur un état de station selon la revendication 1, les types de services de station étant configurés avec des objets graphiques pour distinguer de manière unique les types de services.

4. Procédé de surveillance de fonctionnement et de maintenance basé sur un état de station selon la revendication 3, après avoir obtenu les priorités d'alarme des éléments de réseau correspondants en fonction des degrés d'influence des services d'alarme et des facteurs d'influence des services de station, le procédé consistant en outre à :
afficher au moins un objet graphique correspondant à un type de service de station de la station, les informations d'attribut d'affichage de l'objet graphique affiché étant configurées en fonction du degré d'influence d'un service d'alarme d'un élément de réseau ayant la priorité d'alarme la plus élevée d'un type de service de station correspondant.

5. Procédé de surveillance de fonctionnement et de maintenance basé sur un état de station selon la revendication 4, les informations d'attribut d'affichage comprenant des informations de degré d'influence de service d'alarme représentées par un attribut de couleur et des informations sur le moment où une alarme ayant la plus haute priorité d'alarme est produite.

6. Procédé de surveillance de fonctionnement et de maintenance basé sur un état de station selon la revendication 4, le procédé consistant en outre à :
selon une instruction entrée par un utilisateur, afficher spécifiquement des informations d'attributs d'affichage contenues dans un objet graphique sélectionné sur un dispositif d'affichage actuel.

7. Dispositif de surveillance de fonctionnement et de maintenance basé sur un état de station, comprenant :
un module statistique (10) conçu pour déterminer les types de services d'éléments de réseau dans une station selon les types de réseaux auxquels appartiennent les éléments de réseau ou les types de dispositifs d'élément de réseau et classer les éléments de réseau dans des types de services de station pré-configurés correspondants ;
un module d'analyse (20), conçu pour analyser respectivement les alarmes d'éléments de réseau des types de services de station afin d'obtenir les degrés d'influence des services d'alarme ; et
un module de traitement (30), conçu pour obtenir les priorités d'alarme des éléments de réseau correspondants en fonction des degrés d'influence des services d'alarme et des facteurs d'influence des services de station, de manière à fournir une base pour l'assignation de tâches ;
le module de traitement comprenant :
une unité de reconnaissance (301) conçue pour reconnaître au moins une stratégie de jugement prioritaire pré-configurée, la stratégie de jugement prioritaire définissant une table de correspondance bidimensionnelle de priorité d'alarme des degrés d'influence des services d'alarme et des facteurs d'influence des services de station dans deux dimensions ; et
une unité d'obtention (302), conçue pour consulter la table de correspondance bidimensionnelle de priorité d'alarme en fonction des degrés d'influence des services d'alarme et des facteurs d'influence des services de station et obtenir les priorités d'alarme des éléments de réseau correspondants ;
les degrés d'influence des services d'alarme comprenant l'annulation du service, la dégradation du service et le service normal, l'annulation du service signifie que si une telle alarme survient sur un élément de réseau, les fonctions de l'élément réseau ne fonctionneront pas normalement, l'alarme est importante et émergente et un service d'une telle alarme a la plus grande influence ; la dégradation du service signifie que si une telle alarme se produit sur un élément de réseau, les fonctions de l'élément de réseau peuvent fonctionner ou certaines des fonctions peuvent fonctionner, mais la qualité de service peut se détériorer ; le service normal signifie que si une telle alarme survient sur un élément de réseau, les fonctions de l'élément de réseau peuvent fonctionner normalement, le personnel d'exploitation et de maintenance n'a pas besoin de maintenir l'attribution de tâche immédiate, l'alarme a le degré le plus faible d'urgence, mais le personnel d'exploitation et de maintenance doit toujours faire attention en permanence ;
les facteurs d'influence des services de la station étant divisés en plusieurs niveaux, qui représentent le fait que les alarmes dans différentes zones seront traitées en fonction de priorités différentes.

8. Dispositif de surveillance de fonctionnement et de maintenance basé sur un état de station selon la revendication 7, les types de services de station comprenant un service d'application, un service de porteur ou un service de support.

9. Dispositif de surveillance de fonctionnement et de maintenance basé sur un état de station selon la revendication 7, les types de services de station étant configurés avec des objets graphiques pour distinguer de manière unique les types de services.

10. Dispositif de surveillance de fonctionnement et de maintenance basé sur un état de station selon la revendication 9, le dispositif comprenant en outre :
un module d'affichage (40) conçu pour afficher au moins un objet graphique correspondant à un type de service de station de la station sur un dispositif d'affichage actuel sur un dispositif d'affichage courant, les informations d'attribut d'affichage de l'objet graphique affiché sont conçues selon le degré d'influence d'un service d'alarme d'un élément de réseau ayant la priorité d'alarme la plus élevée d'un type de service de station correspondant.

11. Dispositif de surveillance de fonctionnement et de maintenance basé sur un état de station selon la revendication 10, les informations d'attribut d'affichage comprenant des informations de degré d'influence de service d'alarme représentées par un attribut de couleur et des informations concernant le moment où une alarme ayant la priorité d'alarme la plus élevée est produite.

12. Dispositif de surveillance de fonctionnement et de maintenance basé sur un état de station selon la revendication 10, le dispositif comprenant en outre :
un module de commande d'instruction d'utilisateur (50), conçu pour afficher spécifiquement, selon une instruction entrée par un utilisateur, des informations d'attribut d'affichage contenues dans un objet graphique sélectionné sur le dispositif d'affichage actuel.

13. Équipement de surveillance, comprenant le dispositif de surveillance de fonctionnement et de maintenance basé sur un état de station selon l'une quelconque des revendications 7 à 12.

14. Système de surveillance de fonctionnement et de maintenance basé sur un état de station, comprenant une station ayant au moins un élément de réseau et comprenant en outre l'équipement de surveillance situé dans un centre de surveillance selon la revendication 13.
